# EUROPÄISCHE PATENTSCHRIFT

(11) **EP 1 833 621 B1**
(45) Veröffentlichungstag und Bekanntmachung des Hinweises auf die Patenterteilung: **06.10.2010**
(21) Anmeldenummer: 05800658.6
(22) Anmeldetag: 29.10.2005
(51) Int. Cl.: B08B 1/04, B60S 3/04

(54) **VORRICHTUNG UND VERFAHREN ZUR REINIGUNG VON FELGEN**
DEVICE AND METHOD FOR CLEANING WHEEL RIMS
DISPOSITIF ET PROCEDE POUR NETTOYER DES JANTES

(30) Priorität: 15.12.2004 DE 102004060859
(43) Veröffentlichungstag der Anmeldung: 19.09.2007
(73) Patentinhaber: EISENMANN Anlagenbau GmbH & Co. KG, 71032 Böblingen (DE)
(72) Erfinder: RAU, Thomas, 71032 Böblingen (DE)
(74) Vertreter: Ostertag, Ulrich
(86) Internationale Anmeldenummer: PCT/EP2005/011613
(87) Internationale Veröffentlichungsnummer: WO 2006/066652

(56) Entgegenhaltungen:
- DE-A1- 2 355 763
- DE-A1- 3 740 627
- DE-U1- 7 823 879
- US-A- 4 467 489
- US-A- 4 723 335

## Beschreibung

Die Erfindung betrifft eine Vorrichtung zur Reinigung von Felgen nach dem Oberbegriff des Anspruchs 1 und ein Verfahren zur Reinigung von Felgen nach dem Oberbegriff des Anspruchs 10.

Felgen für Kfz-Räder, insbesondere Aluminiumfelgen, müssen aus Korrosionsschutzgründen, aber auch aus optischen Gründen, lackiert oder beschichtet werden. Ein besonders umweltfreundliches Beschichtungsverfahren ist die Pulverbeschichtung. Dazu wird ein Lackpulver auf die zu beschichtenden Felge aufgebracht und anschließend eingebrannt.

Problematisch ist hierbei jedoch, dass Pulver auch auf die innere Flanschseite der Felge und in deren Nabe gelangen kann und dort dann eingebrannt wird. Diese Beschichtungsspuren müssen anschließend in einem Nachbearbeitungsvorgang manuell durch mechanisches Schleifen entfernt werden. Das Schleifen beeinträchtigt jedoch die Form- und Lagetoleranz der Felgen. Alternativ können Flanschseite und Nabe der Felge auch vor dem Einbrennen von Hand von Farbpulverresten gereinigt werden. Dies ist jedoch sehr arbeitsaufwendig.

Aus der DE 37 40 627 C2 ist eine Vorrichtung der eingangsgenannten Art bekannt geworden, mit welcher Fahrzeugräder in einer Autowaschanlage gereinigt werden können. Dort werden innere und äußere rotierende Bürstenelemente vorgeschlagen, wobei die äußeren Bürstenelemente gegenüber den inneren Bürstenelemente federnd gelagert und damit axial verschieblich sind. Dadurch ist eine Anpassung an unterschiedliche Radformen möglich. Für die Reinigung von Fahrzeugrädern vor dem Einbrennen des Farbpulvers ist diese Vorrichtung nicht geeignet.

Ein Verfahren der eingangs genannten Art geht aus der DE 23 55 763 A1 hervor. Dabei wird eine mit einem Reifen versehene Felge in eine Kammer eingebracht und abgebürstet, wobei anfallender Staub mittels eines Staubsaugers eingefangen wird. Auch dieses Verfahren ist für die Reinigung von Fahrzeugrädern vor dem Einbrennen des Farbpulvers nicht geeignet.

Aufgabe der Erfindung ist es daher, eine Vorrichtung und ein Verfahren zur Reinigung von Felgen anzugeben, mit dem anhaftende Farbpulverreste vor dem Einbrennen von Flansch und Nabe der Felgen entfernt werden können.

Die Aufgabe wird hinsichtlich der Vorrichtung gelöst durch die Merkmale des Anspruchs 1 und hinsichtlich des Verfahrens durch die Merkmale des Anspruchs 10. Vorteilhafte Ausgestaltungen sind den abhängigen Ansprüchen zu entnehmen.

Erfindungsgemäß weist die Vorrichtung eine erste Bürste auf, die in eine Nabe einer zu reinigenden Felge einführbar ist, sowie eine zweite, konzentrisch um die erste Bürste angeordnete zweite Bürste, die an einer Flanschfläche der Felge anliegt, wenn die erste Bürste in die Nabe der Felge eingeführt ist. Die erste Bürste ist dabei gegenüber der zweiten Bürste axial verschiebbar. Außerdem ist ein Antrieb vorgesehen, der die erste und die zweite Bürste jeweils um einen bestimmten Winkel hin und wieder zurück rotiert.

Eine solche Vorrichtung läßt sich gut in eine automatisierte Pulverbeschichtungsanlage zwischen Beschichtungsförderer und Einbrennförderer integrieren oder in vorhandene Pulverbeschichtungsanlagen nachrüsten. Durch die Reinigung der Felgen von Farbpulverresten vor dem Einbrennen entfällt der mechanische Schleifvorgang zur Entfernung eingebrannter Farbpulverreste. Dadurch wird eine erhebliche Qualitätsverbesserung hinsichtlich Form- und Lagetoleranzen der Felgen erreicht. Außerdem wird der Personalaufwand reduziert.

Die erste Bürste ist vorzugsweise gegen die zweite Bürste federnd gelagert. Sie wird so selbsttätig durch Federkraft in die Nabe der Felge eingeführt, ohne dass es eines separaten Stellmechanismus zum Einführen der ersten Bürste bedürfte.

Vorteilhaft ist eine dritte Bürste vorgesehen, die innerhalb der zweiten Bürste orthogonal zu der ersten Bürste angeordnet ist und die ebenfalls an der Flanschfläche der Felge anliegt, wenn die erste Bürste in die Nabe der Felge eingeführt ist. Die dritte Bürste ist zusammen mit der ersten Bürste von dem Antrieb angetrieben und mit der ersten Bürste gegenüber der zweiten Bürste axial verschiebbar. Die dritte Bürste verbessert die Reinigung der Felgen.

Vorzugsweise sind die erste und die zweite Bürste von dem Antrieb derart angetrieben, dass sie Drehbewegungen in entgegengesetztem Drehsinn ausführen. Dadurch wird vermieden, dass ein Drehmoment auf die Felge ausgeübt wird. Die Felge muß daher während der Reinigung nicht besonders gehaltert werden.

Bei einer vorteilhaften Ausgestaltung ist ein Greifer vorgesehen, der derart ausgebildet ist, dass er die zu reinigende Felge in ihrer Nabe ergreift und auf der horizontal mit ihrer Bürstenseite nach oben angeordneten zweiten Bürste ablegt. Dabei wird die erste Bürste durch den Greifer nach unten gedrückt und dringt beim Zurückziehen des Greifers in die Nabe ein. Dies ermöglicht eine besonders einfache Anordnung, die sich leicht in den vorhandenen Lackierprozeß einfügen läßt. Außerdem wird die Felge durch ihr Gewicht gegen die Bürsten gedrückt, was eine aufwendige Einstellung und Überwachung des Bürstenandrucks vermeidet.

Zweckmäßig ist eine Absaugeinrichtung zur Absaugung der abgebürsteten Lackpulverreste während des Bürstvorgangs vorgesehen.

Die Borsten der ersten Bürste können in zwei entgegengesetzten Kreissegmenten auf einem axialen Bürstenkörper angeordnet sein und die Borsten der dritten Bürste in zwei von der ersten Bürste ausgesparten Kreissegmenten. Dadurch wird eine besonders gründliche Reinigung gewährleistet und die Absaugung von Lackpulverresten verbessert.

Vorteilhaft beträgt der Winkel, um den die Bürsten zur Reinigung gedreht werden, in etwa 180° in beiden Richtungen, d.h. die Bürsten werden um diesen winkel je einmal hin und wieder zurückrotiert. Dies führt zu ausreichendem Reinigungserfolg bei kurzer Reinigungsdauer.

Um den Durchsatz an Felgen zu erhöhen, können mehrere Vorrichtungen zu einer Anordnung gruppiert werden, bei der zweckmäßig die Antriebe der Vorrichtungen miteinander gekoppelt sind.

Bei dem erfindungsgemäßen Verfahren
- wird eine zu reinigende Felge von einem Greifer ergriffen und mit einer Flanschfläche nach unten auf einer Reinigungsvorrichtung abgelegt,
- drückt dabei der Greifer eine nach unten federnd gelagerte erste Bürste nach unten und die Felge kommt mit ihrer Flanschfläche auf einer konzentrisch um die erste Bürste angeordneten zweiten Bürste zu liegen,
- wird dann der Greifer gelöst und nach oben zurückgezogen und dabei wird die erste Bürste durch Federkraft in die Nabe der Felge eingeführt, und
- werden die erste und die zweite Bürste um jeweils einen bestimmten Winkel hin und wieder zurück rotiert.

Im folgenden wird ein Ausführungsbeispiel der Erfindung anhand der Zeichnungen näher erläutert. Es zeigen:
- Figur 1: einen Schnitt durch die Reinigungsvorrichtung vor dem Aufsetzen einer Felge,
- Figur 2: einen Schnitt durch die Reinigungsvorrichtung nach dem Aufsetzen einer Felge,
- Figur 3: einen Schnitt durch die Reinigungsvorrichtung mit aufgesetzter Felge nach dem Zurückziehen des Greifers und
- Figur 4: eine Draufsicht auf die Reinigungsvorrichtung ohne Felge.

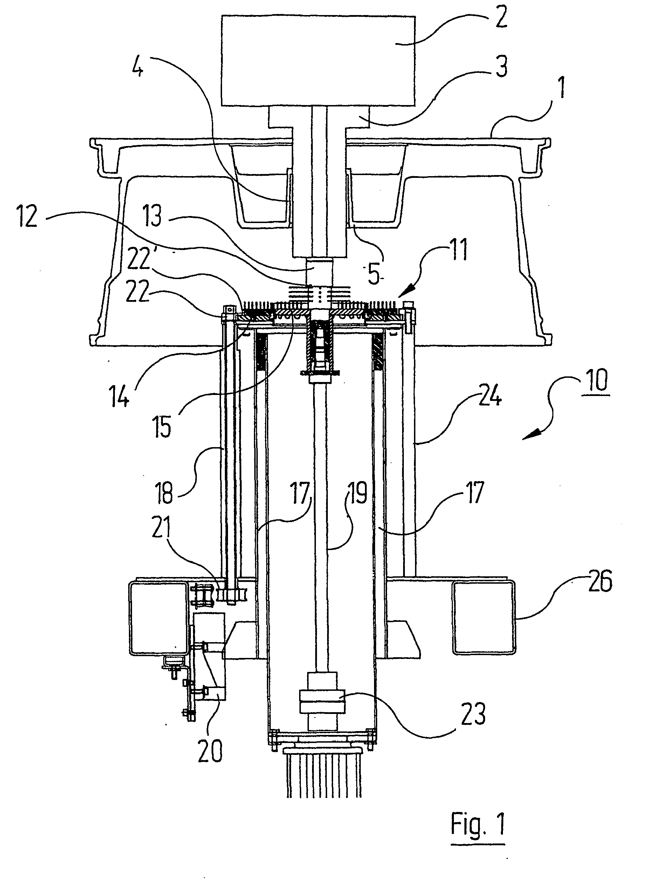

Die in Figur 1 gezeigte Reinigungsvorrichtung 10 umfaßt einen Ablagering 11 mit drei rotierenden Bürsten 12, 14 und 15. Auf dem Ablagering 11 kann von einem Handhabungsgerät 2 mit einem Greifer 3 eine Felge 1 mit ihrer Flanschseite 5 nach unten abgelegt werden. In der Mitte des Anlageringes 11 befindet sich die Nabenbürste 12, deren Bürstenkörper 13 nach oben über den mit Borsten besetzen Abschnitt herausragt. Auf dem Ablagering 11 ist eine äußere Flanschbürste 14 drehbar angeordnet. Die Borsten der Flanschbürste 14 sind vertikal nach oben orientiert, die Borsten der Nabenbürste 12 im wesentlichen horizontal nach außen. Zischen der äußeren Flanschbürste 14 und der Nabenbürste 12 befindet sich eine zweite, innere Flanschbürste 15, die drehfest mit der Nabenbürste 12 verbunden ist.

Der Auflagering 11 wird von vier Stäben 24 getragen, die auf einem Gestellrahmen 26 montiert sind. Die Nabenbürste 12 und die zweite Flanschbürste 15 sind auf einer zentralen Antriebswelle 19 befestigt, die an zwei gefederten Aufhängungen 17 gegenüber dem Auflagering 11 nach unten federnd gelagert ist und von einer Antriebseinheit 23 angetrieben wird. Die Flanschbürste 14 wird über eine seitliche Antriebswelle 18 angetrieben, an deren unterem Ende ein Antriebsrad 21 sitzt, das an eine Antriebseinheit 20 gekoppelt ist, und an deren oberem Ende sich ein Ritzel 22 befindet, daß in ein ringförmiges Zahnrad 22' greift, auf dem die Flanschbürste 14 befestigt ist.

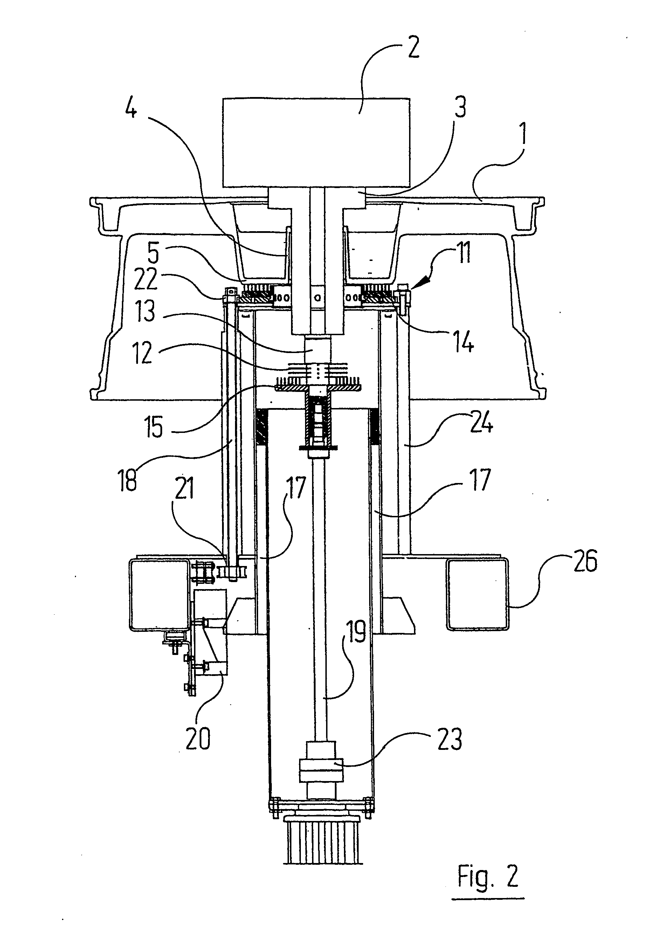

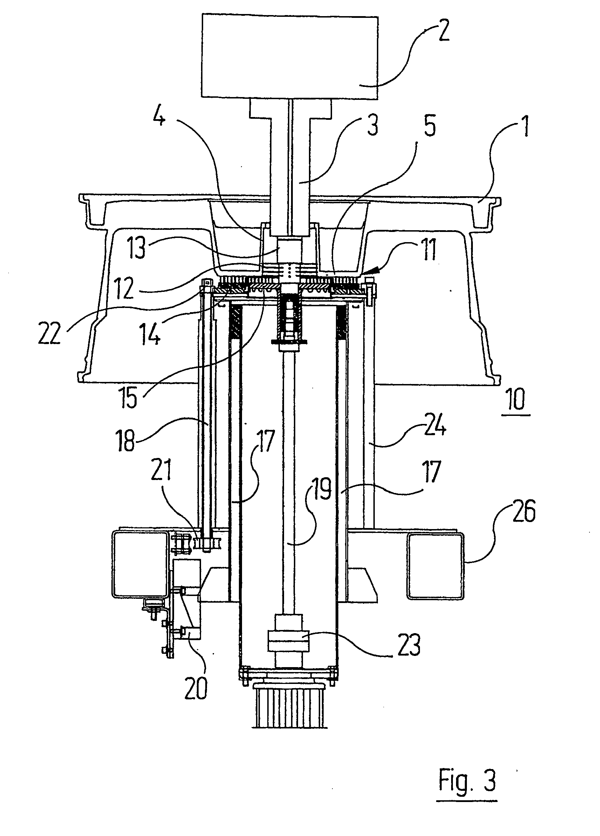

Der Greifer 3 greift durch die Nabe 4 der Felge 1 und hält in aufgespreiztem Zustand die Felge 1 mit dem Flansch 5 nach unten. Figur 1 zeigt den Zustand kurz bevor der Greifer 3 die Felge 1 auf dem Auflagering 11 der Reinigungsvorrichtung 10 absetzt. Dabei stößt der Greifer 3 mit seiner Stirnseite an dem nach oben verlängerten Bürstenkörper 13 der Nabenbürste 12 an. In Figur 2 ist der Zustand gezeigt, nachdem der Greifer 3 die Felge 1 auf dem Auflagering 11 abgesetzt hat. Da die Nabenbürste 12 und die mit ihr verbundene innere Flanschbürste 15 nach unten federnd gelagert sind, weichen sie dem Greifer 3 nach unten aus. Nun wird der Greifer 3 gelöst und nach oben zurückgezogen. Dabei werden Nabenbürsten 12 und innere Flanschbürste 15 durch die Kraft der gefederten Aufhängungen 17 wieder in ihre Ruhelage nach oben bewegt. Dadurch dringt die Nabenbürste in die Nabe 4 der Felge 1 ein und die innere Flanschbürste 15 legt sich an den Flansch 5 der Felge 1 an. Dieser Zustand ist in Figur 3 gezeigt.

Anschließend erfolgt der Bürstvorgang, d.h. die eigentliche Reinigung der Felge 1. Dazu wird die Flanschbürste 14 von der Antriebseinheit 20 um eine halbe Umdrehung hin und zurück gedreht. Gleichzeit wird die Nabenbürste 12 und die innere Flanschbürste 15 von der Antriebseinheit 23 um eine halbe Umdrehung in die entgegengesetzte Drehrichtung hin und zurück gedreht. Die Drehbewegungen erfolgen entgegengesetzt, damit auf die Felge 1 kein Drehmoment ausgeübt wird. Die Borstengeometrien und relative Abmessungen der drei Bürsten sind dazu entsprechend dimensioniert.

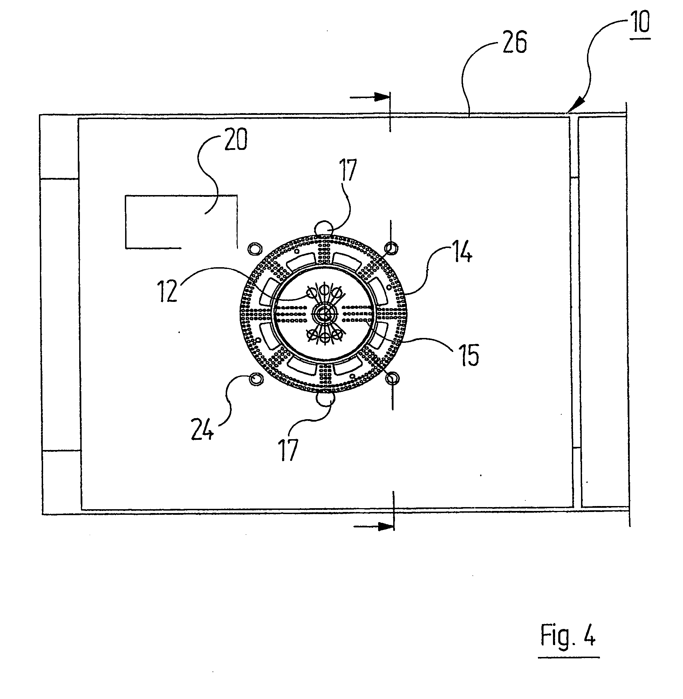

In Figur 4 ist die Vorrichtung 10 ohne eine Felge in einer Draufsicht von oben gezeigt. Dabei ist die Anordnung der Borsten zu erkennen. Die äußere Flanschbürste 14 hat einen äußeren Borstenkranz und acht radial nach innen angeordnete Stege aus Borsten. Die Nabenbürste 12 hat Borsten, die in zwei diametral gegenüberliegenden Kreissegmenten angeordnet sind. Bei der inneren Flanschbürste 15 hingegen sind die Borsten nur in zwei Stegen angeordnet, die in die von der Nabenbürste ausgesparten Kreissegmente greifen. Antriebseinheit 20, gefederte Aufhängung 17 und die Stäbe 24, die den Auflagering 11 (nicht gezeigt) tragen, sind in Figur 4 nur schematisch angedeutet.

Während des Bürstvorgangs wird der Arbeitsraum über eine externe Absaubeinrichtung (nicht gezeigt) abgesaugt. Nach der Reinigung kann die Felge 1 wieder von dem Greifer 3 ergriffen, von der Reinigungsvorrichtung 10 abgehoben und dem weitere Einbrennvorgang zugeführt werden.

In einer industriellen Pulverbeschichtungsanlage können mehrere Reinigungsvorrichtungen der gezeigten Art nebeneinander betrieben werden. Dabei können deren Antriebseinheiten beispielsweise über einen umlaufenden Antriebsriemen gekoppelt sein, so daß nur ein Motor erforderlich ist, um alle Bürsten anzutreiben.

## Patentansprüche

1. Vorrichtung zur Reinigung von Felgen mit einer ersten
Bürste (12), einer zweiten, konzentrisch um die erste Bürste (12) angeordneten Bürste (14) und mit einem Antrieb (20, 23) zum Rotieren der ersten und der zweiten Bürste (12, 14), wobei die erste Bürste (12) gegenüber der zweiten Bürste (14) axial verschiebbar ist,
**dadurch gekennzeichnet, dass**
die erste Bürste in eine Nabe (4) einer zu reinigenden Felge (1) einführbar ist, und dann, wenn die erste Bürste (12) in die Nabe (4) der Felge (1) eingeführt ist, die zweite Bürste (14) an einer Flanschfläche (5) der Felge (1) anliegt, und
die Rotation der ersten und der zweiten Bürste (12, 14) um jeweils einen bestimmten Winkel hin und wieder zurück erfolgt.

2. Vorrichtung nach Anspruch 1, **dadurch gekennzeichnet, dass** die erste Bürste (12) gegen die zweite Bürste (14) federnd gelagert ist.

3. Vorrichtung nach Anspruch 1 oder 2, **gekennzeichnet**
**durch** eine dritte Bürste (15), die innerhalb der zweiten Bürste (14) orthogonal zu der erste Bürste (12) angeordnet ist und die ebenfalls an der Flanschfläche (5) der Felge (1) anliegt, wenn die erste Bürste (12) in die Nabe (4) der Felge (1) eingeführt ist, wobei die dritte Bürste (15) von dem Antrieb (23) zusammen mit der ersten Bürste (12) angetrieben und mit der ersten Bürste (12) gegenüber der zweiten Bürste (14) axial verschiebbar ist.

4. Vorrichtung nach einem der vorhergehenden Ansprüche,
**dadurch gekennzeichnet, dass** die erste und die zweite Bürste (12, 14) von dem Antrieb (20, 23) derart angetrieben sind, dass sie Drehbewegungen in entgegengesetztem Drehsinn ausführen.

5. Vorrichtung nach einem der vorhergehenden Ansprüche,
**gekennzeichnet durch** einen Greifer (3), der derart ausgebildet ist, dass er die zu reinigende Felge (1) in ihrer Nabe (4) ergreift und auf der mit ihrer Bürstenseite nach oben horizontal angeordneten zweiten Bürste (14) ablegt, wobei die erste Bürste (12) **durch** den Greifer (3) nach unten gedrückt wird und beim Zurückziehen des Greifers (3) in die Nabe (4) eindringt.

6. Vorrichtung nach einem der vorhergehenden Ansprüche,
**gekennzeichnet durch** eine Absaugeinrichtung für abgebürstetes Farbpulver.

7. Vorrichtung nach einem der Ansprüche 3 bis 6, **dadurch**
**gekennzeichnet, dass** die erste Bürste (12) Borsten aufweist, die in zwei entgegengesetzten Kreissegmenten auf einem axialen Bürstenkörper (13) angeordnet sind, und dass die dritte Bürste (15) Borsten aufweist, die innerhalb zweier von der ersten Bürste (12) ausgesparter Kreissegmente angeordnet sind.

8. Vorrichtung nach einem der vorhergehenden Ansprüche,
**dadurch gekennzeichnet, dass** der winkel, um den die Bürsten (12, 14, 15) gedreht werden, in etwa 180° in beiden Richtungen beträgt.

9. Anordnung umfassend mehrere Vorrichtungen nach einem der vorhergehenden Ansprüche, bei der die Antriebe (20, 23) miteinander gekoppelt sind.

10. Verfahren zur Reinigung von Felgen, wobei eine zu
reinigende Felge (1) von einem Greifer (3) ergriffen und mit einer Flanschfläche (5) nach unten auf einer Reinigungsvorrichtung (10) abgelegt wird,
**dadurch gekennzeichnet, dass**
- dabei der Greifer (3) eine federnd gelagerte erste Bürste (12) nach unten drückt und die Felge (1) mit ihrer Flanschfläche (5) auf einer konzentrisch um die erste Bürste (12) angeordneten zweiten Bürste (14) zu liegen kommt,
- dann der Greifer (3) gelöst und nach oben zurückgezogen wird und dabei die die erste Bürste (12) durch Federkraft in die Nabe (4) der Felge (1) eingeführt wird, und
- die erste und die zweite Bürste (12, 14) um jeweils einen bestimmten Winkel hin und wieder zurück rotiert werden.

11. Verfahren nach Anspruch 10, **dadurch gekennzeichnet dass** die Drehbewegungen der ersten und zweiten Bürste (12, 14) gegensinnig erfolgen.

12. Verfahren nach Anspruch 10 oder 11, **dadurch gekennzeichnet dass** die erste und die zweite Bürste (12, 14) jeweils um etwa 180° in beide Richtungen gedreht werden.

13. Verfahren nach einem der Ansprüche 10 bis 12, **dadurch**
**gekennzeichnet, dass** während des Bürstvorgangs der Arbeitsraum abgesaugt wird.

## Claims

1. Device for cleaning wheel rims, with a first brush (12), a second brush (14) which is disposed concentrically about the first brush (12) and with a drive (20, 23) for rotating the first and the second brush (12, 14), wherein the first brush (12) can be axially displaced with respect to the second brush (14),
**characterised in that**
the first brush can be introduced into a hub (4) of a wheel rim (1) which is to be cleaned and then when the first brush (12) is introduced into the hub (4) of the wheel rim (1) the second brush (14) lies against a flange face (5) of the wheel rim (1) and
the rotation of the first and the second brush (12, 14) is executed through a specific angle forwards and backwards in each case.

2. Device according to Claim 1, **characterised in that** the first brush (12) is mounted so as to be springy towards the second brush (14).

3. Device according to Claim 1 or 2, **characterised by** a third brush (15) which is disposed inside the second brush (14) orthogonally to the first brush (12) and also lies against the flange face (5) of the wheel rim (1) when the first brush (12) is introduced into the hub (4) of the wheel rim (1), wherein the third brush (15) is driven together with the first brush (12) by the drive (23) and can be axially displaced with the first brush (12) with respect to the second brush (14).

4. Device according to any one of the preceding Claims, **characterised in that** the first and the second brush (12, 14) are driven by the drive (20, 23) such that they execute rotational movements in opposite directions of rotation.

5. Device according to any one of the preceding Claims, **characterised by** a gripper (3) which is formed such that it grips the wheel rim (1) which is to be cleaned in its hub (4) and deposits it on the second brush (14), which is disposed horizontally with its brush side upwards, wherein the first brush (12) is pushed downwards by the gripper (3) and penetrates into the hub (4) when the gripper (3) is withdrawn.

6. Device according to any one of the preceding Claims, **characterised by** a suction device for powdered pigment which is brushed off.

7. Device according to any one of Claims 3 to 6, **characterised in that** the first brush (12) comprises bristles which are disposed in two opposite circle segments on an axial brush body (13), and that the third brush (15) comprises bristles which are disposed inside two circle segments which have been left free by the first brush (12).

8. Device according to any one of the preceding Claims, **characterised in that** the angle through which the brushes (12, 14, 15) are rotated is approximately 180° in both directions.

9. Arrangement comprising a plurality of devices according to any one of the preceding Claims, in which the drives (20, 23) are coupled together.

10. Method for cleaning wheel rims, wherein a wheel rim (1) which is to be cleaned is gripped by a gripper (3) and deposited with a flange face (5) downwards on a cleaning device (10),
**characterised in that**
- the gripper (3) presses a spring-mounted first brush (12) downwards and the wheel rim (1) comes to lie with its flange face (5) on a second brush (14) disposed concentrically about the first brush (12),
- the gripper (3) is then released and withdrawn upwards and in the process the first brush (12) is introduced through spring force into the hub (4) of the wheel rim (1), and
- the first and the second brush (12, 14) are rotated through a specific angle forwards and backwards in each case.

11. Method according to Claim 10, **characterised in that** the rotational movements of the first and second brush (12, 14) are executed in opposite directions.

12. Method according to Claim 10 or 11, **characterised in that** the first and the second brush (12, 14) are in each case rotated through approximately 180° in both directions.

13. Method according to any one of Claims 10 to 12, **characterised in that** the working space is evacuated during the brushing operation.

## Revendications

1. Dispositif de nettoyage de jantes, comprenant une première brosse (12), une deuxième brosse (14) agencée concentriquement autour de ladite première brosse (12), et un entraînement (20, 23) conçu pour faire tourner lesdites première et deuxième brosses (12, 14), ladite première brosse (12) pouvant coulisser axialement vis-à-vis de ladite deuxième brosse (14),
**caractérisé par le fait que**
la première brosse peut être insérée dans un moyeu (4) d'une jante (1) à nettoyer, la deuxième brosse (14) étant ensuite en applique contre la surface d'une aile (5) de ladite jante (1) lorsque ladite première brosse (12) est introduite dans ledit moyeu (4) de ladite jante (1), et
la rotation desdites première et deuxième brosses (12, 14) s'opère en mode aller-retour, selon un angle respectivement déterminé.

2. Dispositif selon la revendication 1, **caractérisé par le fait que** la première brosse (12) est montée élastiquement ou avec effet de ressort vis-à-vis de la deuxième brosse (14).

3. Dispositif selon la revendication 1 ou 2, **caractérisé par** une troisième brosse (15) qui est logée à l'intérieur de la deuxième brosse (14), orthogonalement par rapport à la première brosse (12), et est pareillement en applique contre la surface de l'aile (5) de la jante (1) lorsque ladite première brosse (12) est introduite dans le moyeu (4) de ladite jante (1), sachant que ladite troisième brosse (15) est menée par l'entraînement (23), conjointement à ladite première brosse (12), et peut coulisser axialement avec ladite première brosse (12) vis-à-vis de ladite deuxième brosse (14).

4. Dispositif selon l'une des revendications précédentes, **caractérisé par le fait que** les première et deuxième brosses (12, 14) sont menées, par l'entraînement (20, 23), de façon telle qu'elles effectuent des mouvements rotatoires à sens de rotation opposés.

5. Dispositif selon l'une des revendications précédentes, **caractérisé par** un élément de préhension (3) réalisé de telle sorte qu'il saisisse la jante (1) à nettoyer, dans son moyeu (4), puis la dépose sur la deuxième brosse (14) placée horizontalement, et dont la face de brossage pointe vers le haut, sachant que la première brosse (12) est pressée vers le bas par ledit élément de préhension (3), et pénètre dans ledit moyeu (4) lors de la rétraction dudit élément de préhension (3).

6. Dispositif selon l'une des revendications précédentes, **caractérisé par** un système d'évacuation par aspiration, destiné à de la poudre de peinture enlevée par brossage.

7. Dispositif selon l'une des revendications 3 à 6, **caractérisé par le fait que** la première brosse (12) comporte des soies implantées sur un corps axial (13), selon deux segments circulaires opposés ; et **par le fait que** la troisième brosse (15) présente des soies situées à l'intérieur de deux segments circulaires réservés par ladite première brosse (12).

8. Dispositif selon l'une des revendications précédentes, **caractérisé par le fait que** l'angle, dont les brosses (12, 14, 15) sont animées de rotations, mesure approximativement 180 ° dans les deux directions.

9. Installation incluant plusieurs dispositifs selon l'une des revendications précédentes, dans laquelle les entraînements (20, 23) sont couplés mutuellement.

10. Procédé pour nettoyer des jantes, dans lequel une jante (1) à nettoyer est saisie par un élément de préhension (3), puis appliquée de haut en bas contre un dispositif de nettoyage (10), par la surface d'une aile (5),
**caractérisé par le fait que**
- l'élément de préhension (3) impose une pression vers le bas à une première brosse (12) montée élastiquement ou avec effet de ressort et la jante (1) vient en applique, par la surface de son aile (5), contre une deuxième brosse (14) agencée concentriquement autour de ladite première brosse (12),
- ledit élément de préhension (3) est ensuite desserré, puis rétracté vers le haut, ladite première brosse (12) étant alors introduite, par une force élastique ou de ressort, dans le moyeu (4) de ladite jante (1), et
- lesdites première et deuxième brosses (12, 14) sont mises en rotation en mode aller-retour, selon un angle respectivement déterminé.

11. Procédé selon la revendication 10, **caractérisé par le fait que** les mouvements rotatoires des première et deuxième brosses (12, 14) s'opèrent dans des sens opposés.

12. Procédé selon la revendication 10 ou 11, **caractérisé par le fait que** les première et deuxième brosses (12, 14) sont respectivement animées de rotations d'environ 180 °, dans les deux directions.

13. Procédé selon l'une des revendications 10 à 12, **caractérisé par le fait que** l'espace de travail est aspiré au cours de l'opération de brossage.
